# FASCICULE DE BREVET EUROPEEN

(11) **EP 2 655 172 B1**
(45) Date de publication et mention de la délivrance du brevet: **12.12.2018**
(21) Numéro de dépôt: 11802924.8
(22) Date de dépôt: 20.12.2011
(51) Int. Cl.: B62D 51/02, B62D 51/00, B62D 53/02, B60L 11/18, G05D 1/02

(54) **PLATEFORME MOBILE ROBOTISÉE COLLABARATRICE**
MITARBEITENDES ROBOTISCHES FAHRZEUG
ASSISTING ROBOTIC MOBILE VEHICLE

(30) Priorité: 23.12.2010 FR 1005083
(43) Date de publication de la demande: 30.10.2013
(73) Titulaire: THALES, 92400 Courbevoie (FR)
(72) Inventeur: DEVEZE, Thierry, F-78430 Louveciennes (FR); MORILLON, Joël, F-78114 Magny Les Hameaux (FR); VASSEUR, Laurent, F-95110 Sannois (FR)
(74) Mandataire: Brunelli, Gérald
(86) Numéro de dépôt international: PCT/EP2011/073408
(87) Numéro de publication internationale: WO 2012/084947

(56) Documents cités:
- EP-A1- 0 305 299
- WO-A1-2007/057904
- WO-A2-2008/060689
- FR-A1- 2 652 313
- US-A- 4 909 341
- US-A1- 2002 062 999
- US-A1- 2007 132 204

## Description

La présente invention porte sur un système robotisé collaborateur, i.e. un système robotisé pouvant aider un être humain en milieu difficile ou hostile, particulièrement un utilisateur se déplaçant à pied.

Il est connu des robots télécommandés, par exemple, aidant au déminage. Par exemple le robot démineur SCAMP pour "Specialized Compact Automated Mechanical-clearance Platform" en langue anglaise, est une plate-forme mécanique compacte permettant de sécuriser une zone comprenant des mines. Un tel robot comprend une cage roulante contenant six pistons qui exercent des pressions sur le sol, au moyen de roulettes métalliques. La pression exercée sur le sol est prévue pour faire détonner toute mine se trouvant enfouie à l'endroit où est exercée cette pression. Le robot est prévu pour résister au souffle d'une mine anti-personnel.

Un autre exemple connu est le robot de déminage Tactique HD2 SWAT, radiocommandé, également capable de monter un escalier grâce à l'utilisation de roues munies de dents et d'une bande de roulement en caoutchouc.

De tels robots ne sont pas polyvalents, et ne peuvent pas fournir une assistance étendue à un utilisateur intervenant en milieu hostile.

Un but de l'invention est de proposer un système robotisé collaborateur, d'encombrement réduit, modulable, évolutif, pouvant également transporter son utilisateur.

Selon un aspect de l'invention, il est proposé un système robotisé collaborateur comprenant :
- une plateforme mobile munie de moyens de roulage, d'un ensemble moteur électrique de propulsion, et d'un ensemble de liaison mécanique longitudinal comprenant une articulation ;
- une source de puissance électrique ;
- des moyens de commande manuels du système ;
- des moyens de commande à distance du système ;
- un ensemble calculateur d'au moins un calculateur ;
- des moyens d'accueil matériels adaptés pour intégrer des capteurs et effecteurs, et des moyens d'accueil logiciels adaptés pour intégrer des éléments logiciels ; et
- des moyens de gestion de comportements sensorimoteurs intégrés, adaptés pour arbitrer des mises en oeuvre de plusieurs comportements sensorimoteurs en parallèle à partir de connaissances a priori sur les performances desdits comportements sensorimoteurs (CS) en fonction de l'environnement de la plateforme mobile (PFM), et adaptés pour fonctionner avec une autonomie ajustable variant d'une autonomie complète à une téléopération, en passant par une autonomie partielle de collaboration avec un téléopérateur, pour les différents comportements sensorimoteurs (CS).

Un comportement sensorimoteur est une capacité de déplacement basée sur des informations relatives à l'environnement proche du véhicule ("rejoindre un objet perçu", "suivre une route", ...) ; cette capacité consiste en une boucle d'asservissement recevant en entrée une consigne ainsi que les données issues de divers capteurs d'environnement embarqués, et générant en sortie la commande nécessaire aux différents moteurs agissant sur le déplacement du système. Le système, notamment en mode autonome, est ainsi capable de gérer ou arbitrer les comportement sensorimoteurs à mettre en oeuvre pour effectuer une mission demandée par l'utilisateur.

Un tel système robotisé permet d'avoir un système robotisé collaborateur ayant un mode de commande réversible manuel/télécommandé/autonome, d'encombrement réduit, capable d'éviter ou de franchir des obstacles. En outre, le système robotisé collaborateur est évolutif, et modulable, selon les applications envisagées.

En outre, lesdits moyens de gestion (GES) de comportements sensorimoteurs intégrés (CS), peuvent être adaptés pour arbitrer des mises en oeuvre de plusieurs comportements sensorimoteurs (CS) en parallèle, en outre à partir de connaissances a priori de performances de l'algorithme mis en oeuvre par un comportement sensorimoteur (CS), et d'un indice de confiance sur la capacité de l'algorithme à accomplir correctement le comportement sensorimoteur (CS).

Par exemple, ledit ensemble calculateur est à processeurs parallèles comprenant des processeurs élémentaires aptes à exécuter simultanément une même instruction sur des données différentes appartenant à une structure de données.

L'utilisation de tels calculateurs, par exemple décrits dans la demande de brevet français FR 2162829, permet d'avoir une forte puissance, à basse consommation d'énergie et forte compacité.

Selon un mode de réalisation, ladite articulation est munie d'un moteur électrique commandé par des moyens de gestion de la stabilité de la plateforme munis de moyens de mesure de l'inclinaison de la surface de roulage.

Ainsi l'articulation est une articulation active, permettant un maintien commandé de l'équilibre de la plateforme mobile, notamment lors de l'évolution de la plateforme mobile sur un terrain accidenté ou bien lors du franchissement d'un obstacle.

L'articulation peut être, par exemple, un pivot d'axe longitudinal, en se référant à ladite plateforme mobile.

La présence d'une telle liaison pivot permet d'améliorer à tout instant le contact entre chacune des quatre roues et la surface de roulage, garantissant ainsi l'adhérence nécessaire à un bon contrôle du déplacement, ainsi que la stabilité de l'ensemble en maintenant le centre de gravité du système robotisé à un niveau aussi bas que possible.

Dans un mode de réalisation, le système comprend un radar millimétrique, un télémètre laser, et des moyens de fusion des données délivrées par ledit radar et ledit télémètre.

Ainsi, le système robotisé collaborateur est capable de détecter ou percevoir une gamme étendue d'obstacles susceptibles de se trouver sur sa trajectoire, afin de pouvoir en analyser la forme, voire la nature, afin de les éviter ou les franchir.

Selon un mode de réalisation, lesdits moyens de commande à distance comprennent un élément tactile à communication sans fil, et/ou un viseur tête haute, et/ou une manette de commande.

Ainsi, l'utilisateur peut commander facilement le système robotisé collaborateur à distance, ou en manuel, aisément. Dans le cas de présence d'un viseur tête haute, l'utilisateur peut garder au moins une main disponible, pour effectuer autre chose que la commande du système robotisé, par exemple tenir un outil.

Dans un mode de réalisation, lesdits moyens de commande à distance comprennent un élément à retour de force.

Le retour de force peut être artificiellement généré à partir de grandeurs telles que la proximité d'un obstacle (l'effort ressenti dans le moyen de commande étant alors inversement proportionnel à la distance entre la plateforme mobile et l'obstacle ou entre un élément intégré à la plateforme mobile et l'obstacle ou élément à atteindre) ou bien à partir du couple des moteurs de traction (l'effort ressenti étant alors proportionnel à la difficulté d'avancement de la plateforme mobile).

En cas de manipulation à distance par l'intermédiaire d'un dispositif de préhension appartenant au système robotisé collaborateur, l'utilisateur peut également, grâce au retour de force, gérer efficacement le dispositif de préhension, et manipuler correctement l'élément appréhendé.

Selon un mode de réalisation, ladite plateforme est munie de moyens de transmission d'informations représentatives de l'environnement extérieur de la plateforme, et lesdits moyens de commande à distance comprennent des moyens de visualisation de l'environnement extérieur de la plateforme.

Ainsi, notamment dans le cas d'une transmission vidéo de l'environnement extérieur de la plateforme, l'utilisateur, à distance, peut évaluer cet environnement, et notamment la présence de risques ou non dans cet environnement extérieur de la plateforme.

Dans un mode de réalisation, l'un des comportements sensorimoteurs du système comprend des moyens de sélection d'un élément à atteindre par la plateforme mobile à partir desdits moyens de visualisation de l'environnement extérieur de la plateforme.

Ainsi, l'utilisateur peut, à distance, à partir de la vidéo transmise, fixer un objectif à atteindre au système robotisé collaborateur, qui va le faire de manière autonome. Ces moyens sont particulièrement adaptés pour la réalisation de comportements sensorimoteurs, tel le ralliement automatique d'un objet, consistant à fixer un objectif à atteindre au système robotisé, qui, de manière autonome, va le rejoindre.

Dans un mode de réalisation, le système robotisé collaborateur est d'encombrement réduit, de largeur inférieure à 70 cm et de masse inférieure à 100 kg.

Les dimensions réduites du systèmes robotisé collaborateur, lui permettent d'emprunter tous types de chemin que peut emprunter un piéton.

Dans un mode de réalisation, ladite plateforme mobile est adaptée pour transporter un être humain.

Elle est conçue de manière à pouvoir transporter plus de 150 kg, pour une masse du système de l'ordre de 100 kg.

Selon un mode de réalisation, ledit ensemble de liaison mécanique est démontable.

Par exemple, il peut être monté par des clips, en moins de trois minutes, permettant de relier par l'ensemble de liaison mécanique deux éléments de la plateforme comprenant chacun un essieu et deux roues.

L'invention sera mieux comprise à l'étude de quelques modes de réalisation décrits à titre d'exemples nullement limitatifs et illustrés par les dessins annexés sur lesquels :
- la figure 1 illustre schématiquement un système robotisé collaborateur, selon un aspect de l'invention ; et
- les figures 2 et 3 illustrent schématiquement un mode de réalisation de la plateforme mobile du système robotisé collaborateur, selon un aspect de l'invention.

Sur l'ensemble de figures, les éléments ayants les mêmes références sont similaires.

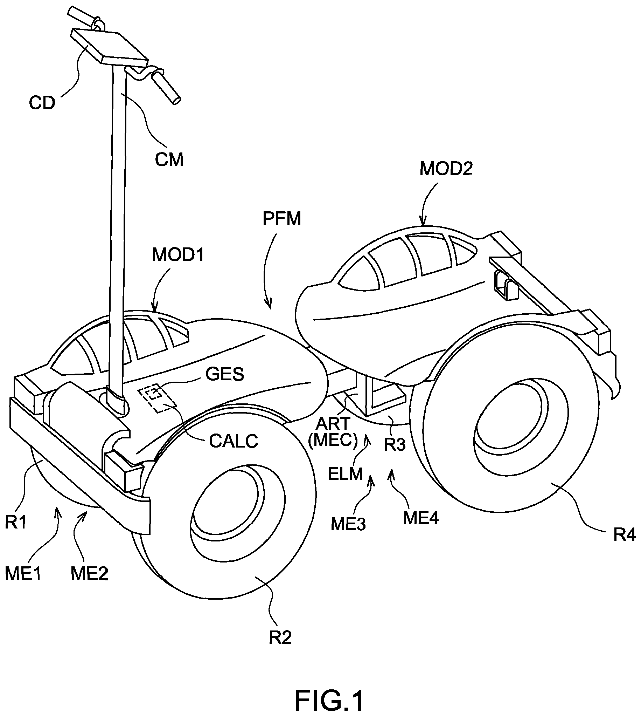

Tel qu'illustré sur la figure 1, un système robotisé collaborateur est représenté, comprenant une plateforme mobile PFM munie d'un ensemble de roulage, en l'occurrence 4 roues R1, R2, R3 et R4, d'un ensemble moteur électrique de propulsion, en l'espèce quatre moteurs électriques ME1, ME2, ME3, et ME4 respectivement associés aux quatre roues R1, R2, R3, et R4 de la plateforme mobile PFM comprenant deux modules de déplacement MOD1 et MOD2. La plateforme mobile PFM comprend également un ensemble de liaison mécanique ELM munie d'une articulation ART.
Une source d'alimentation électrique, non représentée sur la figure alimente en énergie électrique les moteurs électriques du système. La source d'énergie électrique peut être un ensemble de batteries électriques et/ou une pile à combustible.

Le système robotisé collaborateur comprend des éléments de commande manuelle CM, en l'espèce sous forme d'un guidon semblable à celui d'une motocyclette. Le système robotisé collaborateur comprend également des éléments de commande à distance, en l'occurrence un élément tactile à communication sans fil CD, représenté monté sur les éléments de commande manuelle, mais étant démontable instantanément.

Le système robotisé comprend également au moins un calculateur CALC, par exemple à processeurs parallèles comprenant des processeurs élémentaires aptes à exécuter simultanément une même instruction sur des données différentes appartenant à une structure de données. L'utilisation de tels calculateurs, par exemple décrits dans la demande de brevet français FR 2162829, permet d'avoir une forte puissance, à basse consommation d'énergie et forte compacité.

Le ou les calculateurs CALC comprennent des moyens d'accueil matériels adaptés pour intégrer des capteurs et effecteurs, et des moyens d'accueil logiciels, par exemple dans le calculateur CALC, adaptés pour intégrer des éléments logiciels. Ainsi le système est particulièrement évolutif et modulable.

L'articulation ART peut être munie d'un moteur électrique MEC commandé par des moyens de gestion de la stabilité de la plateforme PFM, intégrés dans le calculateur CALC, munis de moyens de mesure de l'inclinaison de la surface de roulage, tel un inclinomètre.

L'articulation ART peut être réalisée sous forme d'un pivot longitudinal, en se référant à la plateforme mobile PFM, qui est une articulation à un degré de liberté, qui est particulièrement utile dans l'ensemble de liaison mécanique ELM, notamment pour franchir une ou plusieurs marches.

L'ensemble calculateur CALC comprend un module de gestion GES de comportements sensorimoteurs intégrés CS, adaptés pour arbitrer des mises en oeuvre de plusieurs comportements sensorimoteurs CS en parallèle.

Le calculateur CALC comprend des moyens logiciels adaptés pour intégrer de nouveaux équipements et de nouvelles fonctionnalités portant, notamment, à la fois sur la capacité de déplacement et sur l'exploitation des divers éléments embarqués, tels des capteurs ou effecteurs.

Concernant le déplacement, Il peut être manuel, l'utilisateur étant transporté sur le véhicule robotisé, ou bien radiocommandé, ou bien autonome supervisé par l'utilisateur.

Le déplacement autonome est basé sur un ensemble de comportements sensorimoteurs CS permettant à la plateforme de se déplacer en tenant compte de l'environnement proche. Chaque comportement sensorimoteur CS est réalisé en mettant en oeuvre un ou plusieurs capteurs fournissant des informations représentatives de l'environnement (caméras mono-vision ou stéréovision en lumière visible ou infrarouge, nappe laser à deux dimensions, imageur laser à trois dimensions, radar millimétrique, ...), et un logiciel dédié exploitant les données délivrées par ces capteurs pour commander la motorisation du véhicule afin d'asservir son déplacement en conséquence.

Les comportements sensorimoteurs CS, connus de l'homme de l'art, intégrés ou disponibles peuvent comprendre, par exemple, les suivants :
- suivi automatique d'une personne, celle-ci pouvant notamment être l'utilisateur du système robotisé,
- suivi automatique d'un bord de route ou de chemin,
- suivi automatique d'un véhicule,
- suivi automatique d'une "référence verticale" (mur, lisière, clôture, ...)
- ralliement automatique d'un point désigné par ses coordonnées géographiques, par exemple exprimées en latitude et longitude, et
- ralliement automatique d'un objet indiqué à distance par l'utilisateur sur une image vidéo perçue par une caméra embarquée sur le système robotisé.

Le déplacement global entre un point de départ et un point d'arrivée est réalisé par l'enchaînement de comportements sensorimoteurs CS et/ou de phases de radiocommande du système robotisé.

L'enchaînement peut être imposé par l'utilisateur dans une phase de préparation de mission ou décidé en temps réel par le module de gestion GES, comprenant par exemple des moyens logiciels embarqués appelés contrôleur de mission. Dans les deux cas, le choix des comportements sensorimoteurs CS pertinents ou adéquats s'appuie sur une certaine connaissance a priori de l'environnement (présence de route ou de lisière pouvant être suivies, d'objet à rallier, ...), d'origine cartographique ou bien capitalisée lors de missions précédentes.

Chaque comportement sensorimoteur CS peut être mis en oeuvre au moyen d'un ou plusieurs algorithmes complémentaires pour améliorer sa robustesse et son domaine de fonctionnement. A ces fins, les algorithmes de base peuvent être complétés par un mécanisme d'auto-évaluation spécifique, fournissant en temps réel un indice de confiance sur sa capacité à accomplir correctement la fonction.

Un mécanisme d'arbitrage multi-algorithmes peut exploiter, en temps réel, cet indice de confiance, ainsi que la formalisation d'une connaissance a priori des performances de l'algorithme, pour confier l'exécution du comportement sensorimoteur CS à l'algorithme jugé le plus efficace à l'instant courant, en fonction de la situation présente. La commutation d'un algorithme à un autre se fait au vol, pendant le déplacement, via des mécanismes qui assurent la continuité du déplacement.

Si aucun des algorithmes disponibles pour un même comportement sensorimoteur CS n'est reconnu capable d'assurer le déplacement, alors il y a échec de la réalisation du comportement sensorimoteur CS correspondant.

En cas d'échec du comportement sensorimoteur CS, si le comportement sensorimoteur CS était imposé par l'utilisateur, ce dernier en est informé et reprend le contrôle du système (en imposant un autre comportement sensorimoteur CS ou par radiocommande). Si le comportement sensorimoteur CS provenait d'une sélection par le module de gestion (contrôleur de mission), ce dernier évalue la possibilité d'activer un autre comportement sensorimoteur CS en s'appuyant sur un ensemble de critères d'évaluation déterministes ou probabilistes. Si aucune possibilité de comportement sensorimoteur CS n'est avérée, alors l'utilisateur est sollicité pour reprendre le contrôle.

Ces différentes fonctionnalités conduisent à définir le concept d'Autonomie Ajustable, dans lequel l'Homme et le Système se répartissent les tâches à accomplir au prorata de leurs capacités et, pour l'Homme, de ses souhaits.

Concernant l'exploitation des charges utiles embarquées, ou, en d'autres termes, des différents éléments embarqués à bord du système robotisé, il est remarqué ce qui suit.

Le système robotisé collaborateur est équipé pour recevoir et transporter des charges utiles diverses, pouvant être passives (sacs, paquetages, ...) ou actives (c'est à dire alimentées pour rendre un service fonctionnel tel qu'une observation, une détection, une manipulation, ou une destruction, ...).

Le système robotisé collaborateur dispose d'un ensemble d'interfaces mécaniques, électriques et numériques standardisées, permettant de connecter, d'alimenter et d'exploiter un ensemble étendu de charges utiles actives.

Le système peut mettre en oeuvre, automatiquement ou par radiocommande, les charges utiles actives embarquées. Dans le cas d'une utilisation par radiocommande, l'IHM de l'opérateur permet de commander à distance l'ensemble des fonctionnalités de la charge utile active.

En outre, le système robotisé collaborateur peut comprendre un radar millimétrique, un télémètre laser, et un module de fusion des données délivrées par ledit radar et ledit télémètre.

Les éléments de commande à distance peuvent comprendre un élément tactile à communication sans fil CD, et/ou un viseur tête haute, et/ou une manette de commande. Les éléments de commande à distance peuvent également comprendre un élément à retour de force, permettant de commander correctement à distance un éventuel dispositif de préhension d'élément.

En outre, la plateforme PFM peut être munie d'un module de transmission d'informations représentatives de l'environnement extérieur de la plateforme PFM, comprenant par exemple une caméra vidéo, et ledit élément tactile à communication sans fil CD peut comprendre un module de visualisation, sur l'écran de l'élément tactile CD de l'environnement extérieur de la plateforme PFM. Un module de sélection d'un élément à atteindre par la plateforme mobile PFM à partir du module de visualisation de l'environnement extérieur de la plateforme.

Le système est d'encombrement réduit, de largeur inférieure à 70 cm et de masse inférieure à 50 kg.

La plateforme mobile est adaptée pour transporter un être humain.

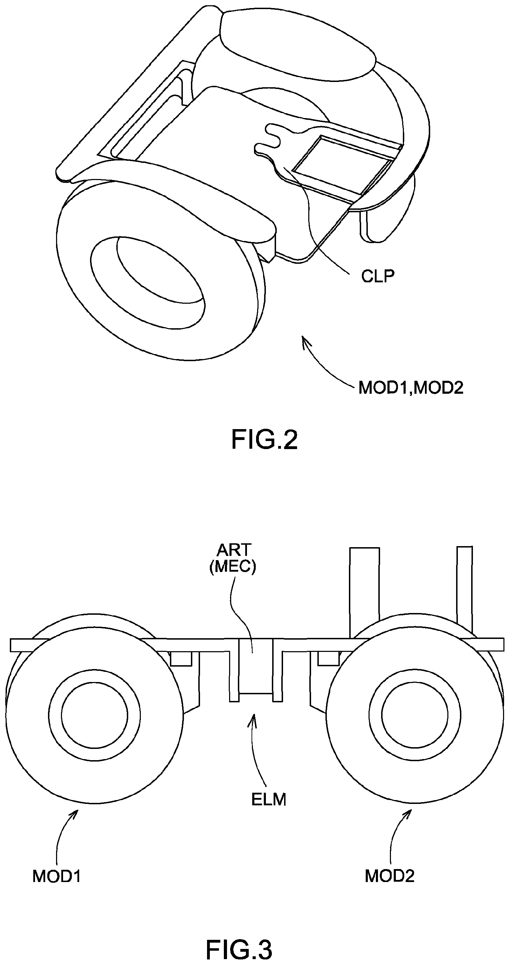

En outre, comme illustré sur les figures 2 et 3, l'ensemble de liaison mécanique ELM est démontable, ce qui est particulièrement pratique pour le transport logistique terrestre et en cas de largage aérien du système en plusieurs parties.

Par exemple, le système peut être monté par des clips CLP, en moins de trois minutes, permettant de relier par l'ensemble de liaison mécanique ELM deux éléments ou modules MOD1 et MOD2 de la plateforme comprenant chacun un essieu et deux roues.

La présente invention propose un système robotisé collaborateur, d'encombrement réduit, modulable, évolutif, pouvant également transporter son utilisateur.

## Revendications

1. Système robotisé collaborateur comprenant :
- une plateforme mobile (PFM) munie de moyens de roulage, d'un ensemble moteur électrique de propulsion (ME1, ME2, ME3, ME4), et d'un ensemble de liaison mécanique (ELM) longitudinal comprenant une articulation (ART) ;
- une source de puissance électrique ;
- des moyens de commande manuels (CM) du système ;
- des moyens de commande à distance (CD) du système ;
- un ensemble calculateur d'au moins un calculateur (CALC) ;
- des moyens d'accueil matériels adaptés pour intégrer des capteurs et effecteurs, et des moyens d'accueil logiciels (CALC) adaptés pour intégrer des éléments logiciels ;
le système robotisé collaborateur étant **caractérisé en ce qu'**il comprend en outre :
- des moyens de gestion (GES) de comportements sensorimoteurs intégrés (CS), adaptés pour arbitrer des mises en oeuvre de plusieurs comportements sensorimoteurs (CS) en parallèle à partir de connaissances a priori sur les performances desdits comportements sensorimoteurs (CS) en fonction de l'environnement de la plateforme mobile (PFM), et adaptés pour fonctionner avec une autonomie ajustable variant d'une autonomie complète à une téléopération, en passant par une autonomie partielle de collaboration avec un téléopérateur, pour les différents comportements sensorimoteurs (CS).

2. Système selon la revendication 1, dans lequel lesdits moyens de gestion (GES) de comportements sensorimoteurs intégrés (CS), sont adaptés pour arbitrer des mises en oeuvre de plusieurs comportements sensorimoteurs (CS) en parallèle, en outre à partir de connaissances a priori de performances de l'algorithme mis en oeuvre par un comportement sensorimoteur (CS), et d'un indice de confiance sur la capacité de l'algorithme à accomplir correctement le comportement sensorimoteur (CS).

3. Système selon la revendication 1 ou 2, dans lequel ledit ensemble calculateur (CALC) est à processeurs parallèles comprenant des processeurs élémentaires aptes à exécuter simultanément une même instruction sur des données différentes appartenant à une structure de données.

4. Système selon l'une des revendications 1 à3, dans lequel ladite articulation (ART) est munie d'un moteur électrique commandé par des moyens de gestion de la stabilité de la plateforme munis de moyens de mesure de l'inclinaison de la surface de roulage.

5. Système selon l'une des revendications 1 à 4, dans lequel l'articulation (ART) est un pivot.

6. Système selon l'une des revendications précédentes comprenant un radar millimétrique, un télémètre laser, et des moyens de fusion des données délivrées par ledit radar et ledit télémètre.

7. Système selon l'une des revendications précédentes, dans lequel lesdits moyens de commande à distance comprennent un élément tactile à communication sans fil (CD), et/ou un viseur tête haute, et/ou une manette de commande.

8. Système selon l'une des revendications précédentes, dans lequel lesdits moyens de commande à distance (CD) comprennent un élément à retour de force.

9. Système selon l'une des revendications précédentes, dans lequel ladite plateforme (PFM) est munie de moyens de transmission d'informations représentatives de l'environnement extérieur de la plateforme, et lesdits moyens de commande à distance (CD) comprennent des moyens de visualisation de l'environnement extérieur de la plateforme (PFM).

10. Système selon la revendication 9, comprenant des moyens de sélection d'un élément à atteindre par la plateforme mobile (PFM) à partir desdits moyens de visualisation de l'environnement extérieur de la plateforme

11. Système selon l'une des revendications précédentes, d'encombrement réduit, de largeur inférieure à 70 cm et de masse inférieure à 100 kg.

12. Système selon l'une des revendications précédentes, dans lequel ladite plateforme mobile (PFM) est adaptée pour transporter un être humain.

13. Système selon l'une des revendications précédentes, dans lequel ledit ensemble de liaison mécanique (ELM) est démontable.

## Patentansprüche

1. Mitarbeitendes Robotersystem, das Folgendes umfasst:
- eine mobile Plattform (PFM), die mit Rollmitteln, einer elektrischen Antriebsmotorbaugruppe (ME1, ME2, ME3, ME4) und einer longitudinalen mechanischen Verbindungsbaugruppe (ELM) mit einer Artikulation (ART) ausgestattet ist;
- eine elektrische Leistungsquelle;
- manuelle Steuermittel (CM) des Systems;
- Fernsteuermittel (CD) des Systems;
- eine Rechenbaugruppe von wenigstens einem Rechner (CALC);
- Hardwareaufnahmemittel, ausgelegt zum Integrieren von Sensoren und Wirkgliedern, und Softwareaufnahmemittel (CALC), ausgelegt zum Integrieren von Softwareelementen;
wobei das mitarbeitende Robotersystem **dadurch gekennzeichnet ist, dass** es ferner Folgendes umfasst:
- Mittel (GES) zum Regulieren von integrierten sensormotorischen Verhaltensweisen (CS), ausgelegt zum Arbitrieren des Implementierens mehrerer sensormotorischer Verhaltensweisen (CS) parallel auf der Basis von Vorabkenntnissen der Leistungen der sensormotorischen Verhaltensweisen (CS) in Abhängigkeit von der Umgebung der mobilen Plattform (PFM), und ausgelegt zum Arbeiten mit einer justierbaren Autonomievariante von einer kompletten Autonomie über eine Teilautonomie der Kollaboration mit einem Teleoperator bis hin zu einer Teleoperation, für die unterschiedlichen sensormotorischen Verhaltensweisen (CS).

2. System nach Anspruch 1, bei dem die Mittel (GES) zum Regulieren von integrierten sensormotorischen Verhaltensweisen (CS) zum Arbitrieren der parallelen Umsetzung mehrerer sensormotorischer Verhaltensweisen (CS) ferner auf der Basis von Vorabkenntnissen von Leistungen des durch eine sensormotorische Verhaltensweise (CS) implementierten Algorithmus und eines Konfidenzindexes für die Kapazität des Algorithmus ausgelegt sind, die sensormotorische Verhaltensweise (CS) korrekt durchzuführen.

3. System nach Anspruch 1 oder 2, bei dem die Rechenbaugruppe (CALC) Parallelprozessoren aufweist, die elementare Prozessoren umfassen, die gleichzeitig einen selben Befehl an unterschiedlichen Daten ausführen können, die zu einer Datenstruktur gehören.

4. System nach einem der Ansprüche 1 bis 3, bei dem die Artikulation (ART) mit einem Elektromotor ausgestattet ist, gesteuert durch Mittel zum Regulieren der Stabilität der Plattform, ausgestattet mit Mitteln zum Messen der Neigung der Rolloberfläche.

5. System nach einem der Ansprüche 1 bis 4, bei dem die Artikulation (ART) ein Drehpunkt ist.

6. System nach einem der vorherigen Ansprüche, das ein Millimeterradar, einen Telemetrielaser und Mittel zum Fusionieren von von dem Radar und dem Telemessgerät gelieferten Daten umfasst.

7. System nach einem der vorherigen Ansprüche, bei dem die Fernsteuermittel ein taktiles Element mit drahtloser Kommunikation (CD) und/oder ein Head-up-Display und/oder einen Steuerhebel umfassen.

8. System nach einem der vorherigen Ansprüche, bei dem die Fernsteuermittel (CD) ein Kraftrückführungselement umfassen.

9. System nach einem der vorherigen Ansprüche, bei dem die Plattform (PFM) mit Informationsübertragungsmitteln ausgestattet ist, die für die Außenumgebung der Plattform repräsentativ sind, und bei dem die Fernsteuermittel (CD) Mittel zum Anzeigen der Außenumgebung der Plattform (PFM) umfassen.

10. System nach Anspruch 9, das Mittel zum Auswählen eines von der mobilen Plattform (PFM) zu erreichenden Elements auf der Basis der Mittel zum Anzeigen der Außenumgebung der Plattform umfasst.

11. System nach einem der vorherigen Ansprüche, mit reduziertem Volumen, einer Breite von weniger als 70 cm und einer Masse von weniger als 100 kg.

12. System nach einem der vorherigen Ansprüche, bei dem die mobile Plattform (PFM) zum Transportieren eines Menschen ausgelegt ist.

13. System nach einem der vorherigen Ansprüche, bei dem die mechanische Verbindungsbaugruppe (ELM) demontierbar ist.

## Claims

1. A collaborative robotized system comprising:
- a mobile platform (PFM) furnished with running means, with an electric motor propulsion assembly (ME1, ME2, ME3, ME4), and with a longitudinal mechanical linkage assembly (ELM) comprising an articulation (ART);
- an electrical power source;
- manual means of control (CM) of the system;
- means of remote control (CD) of the system;
- a computer assembly of at least one computer (CALC);
- hardware-incorporating means suitable for integrating sensors and effectors, and software-incorporating means (CALC) suitable for integrating software elements;
the collaborative robotized system being **characterized in that** it further comprises:
- management means (GES) for managing integrated sensorimotor behaviours (CS), suitable for arbitrating implementations of several sensorimotor behaviours (CS) in parallel on the basis of a priori knowledge about the performance of said sensorimotor behaviours (CS) as a function of the environment of the mobile platform (PFM), and suitable for operating with adjustable autonomy varying from complete autonomy to teleoperation, via partial autonomy of collaboration with a teleoperator, for the various sensorimotor behaviours (CS).

2. The system as claimed in claim 1, in which said management means (GES) for managing integrated sensorimotor behaviours (CS), are adapted to arbitrate implementations of several sensorimotor behaviours (CS) in parallel, furthermore on the basis of a priori knowledge of performance of the algorithm implemented by a sensorimotor behaviour (CS), and of a confidence index regarding the ability of the algorithm to correctly accomplish the sensorimotor behaviour (CS).

3. The system as claimed in claim 1 or 2, wherein said computer assembly (CALC) has parallel processors comprising elementary processors able to execute one and the same instruction simultaneously on different data belonging to a data structure.

4. The system as claimed in any one of claims 1 to 3, wherein said articulation (ART) is furnished with an electric motor controlled by means for managing the stability of the platform which are furnished with means for measuring the inclination of the running surface.

5. The system as claimed in any one of claims 1 to 4, wherein the articulation (ART) is a pivot.

6. The system as claimed in any one of the preceding claims, further comprising a millimetric radar, a laser telemeter, and fusion means for merging the data delivered by said radar and said telemeter.

7. The system as claimed in any one of the preceding claims, wherein said remote control means comprise a wireless communication tactile element (CD), and/or a head-up sight, and/or a control handle.

8. The system as claimed in any one of the preceding claims, wherein said remote control means (CD) comprise a force-feedback element.

9. The system as claimed in any one of the preceding claims, wherein said platform (PFM) is furnished with means for transmitting information representative of the exterior environment of the platform, and said remote control means (CD) comprise means for viewing the exterior environment of the platform (PFM).

10. The system as claimed in claim 9, comprising means for selecting an element to be reached by the mobile platform (PFM) on the basis of said means for viewing the exterior environment of the platform.

11. The system as claimed in any one of the preceding claims, of reduced bulk, of width less than 70 cm and of mass less than 100 kg.

12. The system as claimed in any one of the preceding claims, wherein said mobile platform (PFM) is suitable for transporting a human being.

13. The system as claimed in any one of the preceding claims, wherein said mechanical linkage assembly (ELM) is dismantlable.
